# EUROPEAN PATENT APPLICATION

(11) **EP 4 151 675 A1**
(43) Date of publication of application: **22.03.2023**
(21) Application number: 21197121.3
(22) Date of filing: 16.09.2021
(51) Int. Cl.: C08J 3/22, C08J 5/18, B29C 48/00, C08L 23/04

(54) **ANTIMICROBIAL PLASTIC MATERIALS AND ARTICLES**

(71) Applicant: Livinguard AG, 6330 Cham (CH)
(72) Inventor: CAVIEZEL, Dario, 6330 Cham (CH); GAELLI, René, 6330 Cham (CH); PRONK, Wouter, 6330 Cham (CH)
(74) Representative: Bardehle Pagenberg Partnerschaft mbB Patentanwälte Rechtsanwälte

(57) **Abstract**

The present invention refers to an antimicrobial polymer material and a method for the production thereof, wherein the method comprises melt-compounding a thermoplastic polymer material and a polycationic polymer to produce a molten polymer blend, extruding the molten polymer blend, and cooling the extruded polymer blend. The present invention further refers to an antimicrobial-treated article and a method for manufacturing thereof, wherein the method comprises adding the antimicrobial polymer material to a thermoplastic polymer material to produce a polymer composition, melt-compounding the polymer composition, and forming the article.

## Description

### FIELD OF THE INVENTION

The present invention relates to a method for producing an antimicrobial polymer material, an antimicrobial polymer material obtained thereby, use of an antimicrobial polymer material as masterbatch for manufacturing an antimicrobial-treated article, a method for manufacturing an antimicrobial-treated article, and the article obtained thereby.

### BACKGROUND OF THE INVENTION

Disinfectants are extensively used in everyday life to prevent microbial spread and microbial infections, such as in the health care sector, the food industry, agriculture, or in common household products. Disinfectants can be provided in a solution and applied directly onto contaminated surfaces, such as in hospitals, on laboratory equipment, or skin wounds. Furthermore, disinfectants can be attached to materials to render these materials antimicrobial, such as plastics, or textiles. Antimicrobial materials find use, for example, in the textile industry, wound dressings or functional wear.

In the prior art, methods for preparing antimicrobial textile materials are known. US 7 790 217 B2 describes a method of attaching an antimicrobial cationic polyelectrolyte to the surface of cellulosic substrates, e.g., cotton materials, wherein the substrate is exposed to a solution of the antimicrobial cationic polyelectrolyte, followed by thoroughly drying the treated substrate.

Furthermore, methods for preparing antimicrobial plastic materials are known. CN103172991 A describes the preparation of antibacterial polylactic acid (PLA) plastics using polyhexamethylene guanidine as antimicrobial agent for melt grafting to the starting plastics. CN105462071 A describes low-odor antibacterial thermoplastic polymer compositions using antibacterial jellyfish pellets.

There is still a need for methods rendering plastic materials antimicrobial and for providing antimicrobial plastic articles. In particular, there is a need for antimicrobial plastic articles with very low toxicity, which are suitable, e.g., for food contact. The antimicrobial plastic articles should exhibit a long durability, that is, the antimicrobial agent used should not significantly leach out from the plastic article, and the effectivity of the antimicrobial agent within the plastic material should be retained. Furthermore, the antimicrobial plastic materials and articles should be produced in a reliable, reproducible and cost-efficient manner.

### SUMMARY OF THE INVENTION

It is an object of the present invention to overcome some or all shortcomings of the prior art, and to provide an antimicrobial polymer material and a method for its production. It is a further object of the present invention to provide an antimicrobial polymer article and a method for its manufacturing.

Some or all of these objects are solved by the subject matter of the independent claims. Preferred embodiments are subject matter of the dependent claims.

In accordance with the present invention, an article is provided to which one or more polycationic polymers are adhered, said polycationic polymers conveying antimicrobial properties to the material in a durable and non-leaching manner. The article is manufactured by treating a thermoplastic polymer material with an antimicrobial polymer material or an antimicrobial masterbatch.

A 1^{st} embodiment of the invention is a method for producing an antimicrobial polymer material, said method comprising the following steps:
- providing a thermoplastic polymer material,
- providing at least one polycationic polymer,
- melt-compounding the thermoplastic polymer material and the at least one polycationic polymer, to produce a molten polymer blend,
- extruding the molten polymer blend, and
- cooling the extruded polymer blend.

According to a 2^{nd} embodiment, in the 1^{st} embodiment, the thermoplastic polymer material is selected from the group consisting of polyethylene, low density polyethylene, high density polyethylene, linear low density polyethylene, polypropylene, acrylonitrile butadiene styrene, polycarbonate, polybenzimidazole, polyphenylene oxide, ethylene-vinyl alcohol copolymer, ethylene-vinyl acetate copolymer, thermoplastic polyurethane, polyethylene terephthalate.

According to a 3^{rd} embodiment, in the 1^{st} or 2^{nd} embodiments, the thermoplastic polymer material is low density polyethylene, linear low density polyethylene, ethylene vinyl alcohol copolymer, and/or polypropylene.

According to a 4^{th} embodiment, in the 1^{st} embodiment, the thermoplastic polymer material is selected from the group consisting of polylactic acid, cellulose acetate, cellulose triacetate, polybutylene succinate, and polybutylene adipate terephthalate, preferably the thermoplastic polymer material is polylactic acid.

According to a 5^{h} embodiment, in any one of the preceding embodiments, the at least one polycationic polymer is selected from the group consisting of polyvinyl amine (PVAm), polyallyl amine (PAAm), and polydiallyl amine (PDAm), preferably the polycationic polymer is polyvinyl amine.

According to a 6^{th} embodiment, in any one of the preceding embodiments, the polycationic polymer is not selected from the group consisting of an organosilane compound, polyglucosamine (chitosan), and polyhexamethylene biguanide (PHMB).

According to a 7^{th} embodiment, in any one of the preceding embodiments, the polycationic polymer is provided in solid form.

According to an 8^{th} embodiment, in the method of the preceding embodiment, the polycationic polymer is prepared from an aqueous solution by freeze-drying.

According to a 9^{th} embodiment, in the preceding embodiment, the polycationic polymer is prepared from an aqueous solution comprising 3 to 15%, preferably 4 to 10%, more preferably 5 to 7% by weight of polyvinyl amine and/or 30 to 95%, preferably 40 to 90%, more preferably 50 to 80% by weight of water.

According to a 10^{th} embodiment, in any one of the preceding embodiments, the molten polymer blend comprises the at least one polycationic polymer in an amount of from 10 to 80%, preferably 20 to 60%, more preferably 30 to 50% by weight, and/or the thermoplastic polymer material in an amount of from 90 to 20%, preferably 80 to 40%, more preferably 70 to 50% by weight.

According to an 11^{th} embodiment, in any one of the preceding embodiments, the melt-compounding is carried out in an extruder or compounder.

According to a 12^{th} embodiment, in the preceding embodiment, the compounder is a twin-screw compounder.

According to a 13^{th} embodiment, in any one of the preceding embodiments, the molten polymer blend is extruded through a die, preferably a die having a circular, oval or rounded cross-section.

According to a 14^{th} embodiment, in any one of the preceding embodiments, the extruded polymer blend is cooled by a water bath and/or a conveyor belt filled with water.

According to a 15^{th} embodiment, in any one of the preceding embodiments, the cooled polymer blend is pelletized, preferably by a pelletizing device, cutting device, or granulator.

A 16^{th} embodiment of the invention is an antimicrobial polymer material obtainable by a method according to any one of the preceding embodiments.

According to a 17^{th} embodiment, in the preceding embodiment, the antimicrobial polymer material is in the form of pellets.

An 18^{th} embodiment of the invention is a use of an antimicrobial polymer material of any one of the 16^{th} or 17^{th} embodiments as a masterbatch for manufacturing an antimicrobial-treated article.

A 19^{th} embodiment of the invention is a method for manufacturing an antimicrobial-treated article, the method comprising:
adding an antimicrobial polymer material as defined in the 16^{th} or 17^{th} embodiment to a thermoplastic polymer material to produce a polymer composition, melt-compounding the polymer composition, and forming the article.

According to a 20^{th} embodiment, in preceding embodiment, the polymer composition comprises 1 to 30%, preferably 2 to 15%, more preferably 3 to 10% by weight of the antimicrobial polymer material and 70 to 99%, preferably 85 to 98%, more preferably 90 to 97% by weight of the thermoplastic polymer material.

According to a 21^{th} embodiment, in the 19^{th} or 20^{th} embodiments, the polymer material of the antimicrobial polymer material and of the thermoplastic polymer material is the same.

According to a 22^{nd} embodiment, in the 19^{th} or 20^{th} embodiments, the polymer material of the antimicrobial polymer material and of the thermoplastic polymer material is different.

According to a 23^{rd} embodiment, in any one of the 19^{th} to 22^{nd} embodiments, the polymer material is low density polyethylene, linear low density polyethylene, ethylene vinyl alcohol copolymer, and/or polypropylene.

According to a 24^{th} embodiment, in any of the 19^{th} to 23^{rd} embodiments, the melt-compounding is carried out in an extruder or compounder.

According to a 25^{th} embodiment, in any one of the 19^{th} to 24^{th} embodiments, the article is formed by film extrusion or blow molding.

According to a 26^{th} embodiment, in any one of the 19^{th} to 24^{th} embodiments, the article is formed by injection molding.

A 27^{th} embodiment of the invention is an article obtainable by a method according to any one of the 19^{th} to 26^{th} embodiments.

According to a 28^{th} embodiment, in the preceding embodiment, the article comprises an amount of the least one polycationic polymer of 0.3 to 5%, preferably 0.5 to 3%, more preferably 1 to 2% by weight, based on 100% by weight of the polymer composition.

According to a 29^{th} embodiment, in the 27^{th} or 28^{th} embodiments, the article is a film.

According to a 30^{th} embodiment, in the 27^{th} or 28^{th} embodiments, the article is a molded article.

According to a 31^{th} embodiment, in any one of the 27^{th} to 30^{th} embodiments, the article has an antimicrobial activity of at least of 90% (1 log) as measured by ISO 22196 against *Escherichia coli* ATCC 25922 and/or *Staphylococcus aureus* ATCC 6538 and/or *Pseudomonas aeroginosa* ATCC 15442 and/or *Salmonella enterica* ATCC 10708 and/or *Candida albicans* ATCC 10231.

The term "antimicrobial" as used in the present invention relates to the ability to kill at least some types of microorganisms, or to inhibit the growth or reproduction of at least some types of microorganisms. Said term relates to a product or process that is harmful to one or more "microorganism" as used in the context of the present invention. Preferably, the one or more "microorganism" gets killed by the "antimicrobial" product or process.

The term "antimicrobial agent" as used in the present invention means a chemical compound that acts antimicrobial against at least some types of microorganisms. Exemplary antimicrobial agents are polycationic compounds and quaternary ammonium compounds (quats).

The terms "antimicrobial polymer material" and "antimicrobial masterbatch" are used interchangeably in the context of the present invention. Furthermore, the terms "polymer material" and "plastics material" are used interchangeably. In addition, the terms "antimicrobial-treated article" and "antimicrobial polymer article" are used interchangeably.

### DETAILED DESCRIPTION OF THE INVENTION

Preferred embodiments and examples of the invention will be described in the following detailed description, without limiting the present invention to these embodiments and examples.

The inventors of the present invention found that the deposition of positive surface charges on a plastic material confers an antimicrobial activity to the plastic material and articles treated with the plastic material. The inventors further found that this effect can be advantageously accomplished by using specific polycationic polymers. Advantageously, polycationic polymers have a very low toxicity and are suitable, e.g., for food contact.

### Antimicrobial polymer material

In the method of the invention for producing an antimicrobial polymer material, a thermoplastic polymer material and a polycationic polymer are melt-compounded to produce a molten polymer blend. The melt-compounding can be carried out in an extruder or compounder, for example a twin-screw compounder having several zones. Such devices are known in the art and commercially available. The thermoplastic polymer material and the polycationic polymer are fed into an extruder, wherein the thermoplastic polymer material is preferably fed via the main feeder and the polycationic polymer, particularly the polyvinyl amine, is preferably fed in solid form through a side feeder. Preferably, for both polymers separate gravimetrical feeders are used.

Suitable melting temperatures and temperature profiles in the extruder or compounder depend on the polymer used and can be determined by the skilled person by routine measures. For example, in an extruder having five zones, the first zone has preferable a temperature of between 50 and 90 °C, preferably between 55 and 75 °C, in particular in case the polymeric material is a low density polyethylene; or between 70 and 110 °C, preferably between 80 and 100 °C, in particular in case the polymeric material is polylactic acid; or between 100 and 140 °C, preferably between 110 and 130 °C, in particular in case the polymeric material is ethylene vinyl alcohol. In further preferred embodiments, the antimicrobial polymer material and the thermoplastic polymer material pass a melting zone in the extruder or compounder, wherein the melting zone has a temperature of between 100 and 140 °C, preferably 110 and 130 °C, in particular in case the polymeric material is a low-density polyethylene; or between 170 and 210 °C, preferably 180 and 200 °C, in particular in case the polymeric material is polylactic acid; or between 190 and 230 °C, preferably between 200 and 220 °C, in particular in case the polymeric material is ethylene vinyl alcohol. In exemplary embodiments, during extrusion, the extruder screw rotates at a rotation velocity of between 80 and 120 rpm, preferably between 90 and 110 rpm.

The thermoplastic polymer material can be any thermoplastic polymer that is suitable for processing in an extruder or compounder. Suitable thermoplastic polymers are polyethylene, low density polyethylene, high density polyethylene, linear low density polyethylene, polypropylene, acrylonitrile butadiene styrene, polycarbonate, polybenzimidazole, polyphenylene oxide, ethylene-vinyl alcohol copolymer, ethylene-vinyl acetate copolymer, thermoplastic polyurethane, polyethylene terephthalate, and combinations thereof. In a preferred embodiment of the invention, the thermoplastic polymer is low density polyethylene, linear low density polyethylene, ethylene vinyl alcohol copolymer, and/or polypropylene. In other embodiments of the invention, the thermoplastic polymer is a renewable, plant-based or eco-friendly thermoplastic polymer, particularly a polymer selected from the group consisting of polylactic acid (PLA), cellulose acetate (CA), cellulose triacetate (CTA), polybutylene succinate (PBS), and polybutylene adipate terephthalate (PBAT), most preferably the thermoplastic polymer material is polylactic acid.

The polycationic polymer used is preferably selected from the group consisting of polyvinyl amine (PVam), polyallyl amine (PAAm), polydiallyl amine (PDAm, PAS), and a combination thereof. These polymers are known in the art and commercially available. The preferred polycationic polymer is polyvinyl amine. In a further preferred embodiment, polyvinyl amine is used in not-complexed form. In an exemplary embodiment, the polycationic polymer is not an organosilane compound. In a further exemplary embodiment, the polycationic polymer is not polyglucosamine (chitosan). In another exemplary embodiment, the polycationic polymer is not polyhexamethylene biguanide (PHMB).

Commercially available polycationic polymers, specifically polyvinyl amine, are commonly provided as aqueous solutions. However, the inventors found that when aqueous solutions are added to the melt, the melt will foam and lead to inferior products. Therefore, in preferred embodiments of the invention, the polycationic polymer is used in solid form.

In a particularly preferred embodiment, the polycationic polymer, preferable polyvinyl amine, is prepared by freeze-drying from an aqueous solution comprising, e.g., 5 to 10% by weight of the polycationic polymer. Suitable solutions comprise 5 to 10% by weight of polyvinyl amine, and 50 to 80% by weight of water, the remainder being commonly residues or products from the production process and/or any auxiliaries. The inventors found that freeze-drying aqueous solutions of polycationic polymers yields a powder form trickles easily and can therefore be readily added by available machinery into the melt. In contrast, other drying methods will yield a gel-like substance, or a powder which does not trickle well.

In a preferred embodiment, the molten polymer blend is extruded through a die, preferably a die having a circular, oval or rounded cross-section. Most preferably, the die has a round cross-section and produces strands of the polymer blend. In an exemplary embodiment, the strands of the extruded polymer blend are cooled by a water bath or a conveyor belt filled with water. After cooling, the polymer blends or strands are preferably pelletized in a known manner, e.g., by a pelletizing device, cutting device, or granulator. Preferably, the antimicrobial polymer material of the invention is in form of pellets.

According to an embodiment of the invention, the antimicrobial polymer material is used as a masterbatch for manufacturing an antimicrobial-treated article.

### Antimicrobial polymer article

In the method for manufacturing an antimicrobial-treated article, the antimicrobial polymer material is added to a thermoplastic polymer material to produce a polymer composition. In exemplary embodiments, the polymer composition comprises 1 to 30% by weight, preferably 2 to 20% by weight, of the antimicrobial polymer material (masterbatch), and 70 to 99% by weight, preferably 80 to 98% by weight, of the thermoplastic polymer material.

The polymer of the antimicrobial polymer material and the polymer of the thermoplastic polymer material can be the same or different. Suitable polymers are selected from the group consisting of polyethylene, low density polyethylene, high density polyethylene, linear low density polyethylene, polypropylene, acrylonitrile butadiene styrene, polycarbonate, polybenzimidazole, polyphenylene oxide, ethylene-vinyl alcohol copolymer, ethylene-vinyl acetate copolymer, thermoplastic polyurethane, polyethylene terephthalate, and combinations thereof. Preferably, the polymer of the antimicrobial polymer material and the polymer of the thermoplastic polymer material are low density polyethylene, linear low density polyethylene, ethylene vinyl alcohol copolymer, and/or polypropylene. In a preferred embodiment, a combination of linear low density polyethylene (LLDPE) for the antimicrobial polymer material and low density polyethylene (LDPE) for the thermoplastic polymer material is used. In another preferred embodiment, the polymer of both the antimicrobial polymer material and the thermoplastic polymer material is ethylene-vinyl alcohol copolymer (EVOH).

The antimicrobial polymer material and the thermoplastic polymer material are melt-compounded in devices known in the art, for example, an extruder or compounder. The molten polymer composition is further processed to form an article.

In preferred embodiments of the invention, the article formed is a film or molded article. A film can be formed by methods known in the art, preferably by film extrusion or blow molding. When producing multi-layer films using different polymers for the different layers, it is preferred to use an adhesion promotor. For example, when producing a three-layer film by coextrusion with one outer layer being based on LDPE and the other outer layer being based on EVOH, it is preferred that the inner layer is based on a specific polymer promoting adhesion between LDPE and EVOH, for example, a maleic anhydride grafted polyethylene-based grade. A suitable commercial product is ADMER^{™} NF528E of Mitsui Chemicals.

A molded article can be molded by methods known in the art, for example, injection molding.

The antimicrobial activity of the article can be measured according to the standard ISO 22196. The preparation of the test samples according to ISO 22196 includes the following steps:
1. Wash the samples using deionized water, dry them using paper towels.
2. Grind the surface to test with a fine sandpaper (220) to eliminate the top layer and other possible residue.
3. Rinse the samples with ethanol followed by a rinse with deionized water.
4. Dry the samples at 70 °C for 30 minutes.
5. The test samples are now ready to use.

In exemplary embodiments, the article has an antimicrobial activity of at least of 90% (1 log) as measured by ISO 22196 against *Escherichia coli* ATCC 25922 and/or *Staphylococcus aureus* ATCC 6538 and/or *Pseudomonas aeroginosa* ATCC 15442 and/or *Salmonella enterica* ATCC 10708 and/or *Candida albicans* ATCC 10231. In further exemplary embodiments, the article exhibits a reduction value of *Escherichia coli* ATCC 25922 and/or *Staphylococcus aureus* ATCC 6538 and/or *Pseudomonas aeroginosa* ATCC 15442 and/or *Salmonella enterica* ATCC 10708 and/or *Candida albicans* ATCC 10231 measured in accordance with ISO 22196 by/of at least 90% (1 log), preferably at least 99% (2 log), more preferably at least 99.9% (3 log), and most preferably at least 99.99% (4 log), within 1 hour of contact time, preferably within 15 minutes of contact time and/or of at least 99% (2 log), preferably at least 99.9% (3 log), more preferably at least 99.99% (4 log), particularly at least 99.999 (5 log), and most preferably at least 99.9999% (6 log) within 24 hours of contact time, preferably within 10 hours of contact time, more preferably within 4 hours of contact time.

The invention will be further described by the following examples which illustrate the preparation of antimicrobial polymer materials and antimicrobial polymer article, without limiting the invention.

### Examples

### Example 1

In Example 1, several masterbatches (MB) were prepared from thermoplastic polymer material and polycationic polymer.

The following materials were used (melt flow index (MFI) indicated in right column) as thermoplastic polymers:

| | | |
|---|---|---|
| LDPE | SABIC^{®} LDPE 2100No | 0,3 190 °C/2.16 kg |
| EVOH | EVAL^{™} F171B | 1,6 190 °C/2.16 kg |
| AP | ADMER^{™} NF528E | 2,5 190 °C/2.16 kg |
| LLDPE | LL6101XR Exxon | 20 190 °C/2.16 kg |
| PP 1 | Moplen HP950Y Lyondel | 1200 230 °C/2.16 kg |
| PP 2 | HG565FB Borealis | 26 230 °C/2.16 kg |

| | | |
|---|---|---|
| ADMER^{™} NF528E was used as adhesion promoter polymer (AP). | | |

The following polycationic polymers were used:
- Polyvinyl amine (PVAm):: Lupamin 9095 (BASF): copolymer of vinylformamide/vinylamine of high-molar-mass; degree of hydrolysis > 90%; solid content 20-22%; polymer content 6-8%, hereinafter the mean value 7% was used;
- Polydiallyl amine (PAS).: PAS-21CL (Nittobo Medical): secondary amine homopolymer in water solution, mean molecular weight 50,000 (M.W.), polymer concentration 25%.

The polymers and amounts as listed in the Table 1 hereinafter were compounded in an extruder (ZSK18 MC from Werner & Pfleiderer, respectively Coperion) to produce masterbatches, wherein the thermoplastic polymer material was fed via the main feeder and the polycationic polymer was fed in solid form through a side feeder. The polycationic polymer (PVAm, PAS) was freeze-dried from the supplied aqueous solution to prepare the solid form used.

**Table 1**

| MB | matrix | wt% matrix | P* | wt% P** | wt% P* | wt% P* conc. |
|---|---|---|---|---|---|---|
| MB 1 | LLDPE | 70 | PVAm | 30 | 2.1 | 1.51 |
| MB 1-2 | LLDPE | 59.5 | PVAm | 40,5 | 2.835 | 1.77 |
| MB 2 | EVOH | 70 | PVAm | 30 | 2.1 | 1.51 |
| MB 3 | LLDPE | 60 | PAS | 40 | 10 | 7.00 |
| MB 5 | PP 1 | 70 | PVAm | 30 | 2.1 | 1.51 |
| MB 5-1 | PP | 70 | PVAm | 30 | 2.1 | 1.51 |

| | | | | | | |
|---|---|---|---|---|---|---|
| P*: polycationic polymer wt% P**: amount of solution of polycationic polymer | | | | | | |

### Example 2

The masterbatches MB 1, MB 1-2, MB 2 and MB 3 produced in Example 1 were used to produce films by film extrusion on a three-layer flat film production line. The recipes of the three layers of the films are shown in Table 2 hereinafter.

**Table 2**

| First outer layer | | Inner layer | | Second outer layer | | X% MB |
|---|---|---|---|---|---|---|
| 15 µm | | 10 µm | | 15 µm | | |
| **LDPE** | 100% | **LDPE** | 100% | **LDPE** | 100% | 0 |
| **LDPE** | 100-X% | **LDPE** | 100% | **LDPE** | 100% | 1 |
| MB1 | X% | | | | | 3 |
| | | | | | | 6 |
| | | | | | | 12 |
| **LDPE** | 100-X% | **LDPE** | 100% | **LDPE** | 100% | 1 |
| MB 3 | X% | | | | | 3 |
| | | | | | | 6 |
| | | | | | | 12 |
| **LDPE** | 100-X% | **LDPE** | 100% | **LDPE** | 100-X% | 1 |
| MB 1-2 | X% | | | MB 1-2 | X% | 3 |
| | | | | | | 6 |
| | | | | | | 12 |

| 40 µm | | 20 µm | | 40 µm | | |
|---|---|---|---|---|---|---|
| **LDPE** | 100% | AP | 100% | **EVOH** | 100% | 0 |
| **LDPE** | 100-X% | AP | 100% | **EVOH** | 100% | 6 |
| MB1 | X | | | | | |
| **LDPE** | 100-X% | AP | 100% | **EVOH** | 100% | 6 |
| MB3 | X | | | | | |
| **LDPE** | 100% | AP | 100% | **EVOH** | 100-X% | 6 |
| | | | | MB2 | X | |

| 40 µm | | 20 µm | | 40 µm | | |
|---|---|---|---|---|---|---|
| **EVOH** | 100% | **EVOH** | 100% | **EVOH** | 100% | 0 |
| **EVOH** | 100-X% | **EVOH** | 100% | **EVOH** | 100% | 1 |
| MB 2 | X% | | | | | 3 |
| | | | | | | 6 |
| | | | | | | 12 |

## Claims

1. A method for producing an antimicrobial polymer material, said method comprising the following steps:
- providing a thermoplastic polymer material,
- providing at least one polycationic polymer,
- melt-compounding the thermoplastic polymer material and the at least one polycationic polymer, to produce a molten polymer blend,
- extruding the molten polymer blend, and
- cooling the extruded polymer blend.

2. The method of claim 1, wherein the thermoplastic polymer material is selected from the group consisting of polyethylene, low density polyethylene, high density polyethylene, linear low density polyethylene, polypropylene, acrylonitrile butadiene styrene, polycarbonate, polybenzimidazole, polyphenylene oxide, ethylene-vinyl alcohol copolymer, ethylene-vinyl acetate copolymer, thermoplastic polyurethane, and polyethylene terephthalate, in particular wherein the thermoplastic polymer material is low density polyethylene, linear low density polyethylene, ethylene vinyl alcohol copolymer, and/or polypropylene.

3. The method of claim 1, wherein the thermoplastic polymer material is selected from the group consisting of polylactic acid, cellulose acetate, cellulose triacetate, polybutylene succinate, and polybutylene adipate terephthalate, preferably the thermoplastic polymer material is polylactic acid.

4. The method of any one of the preceding claims, wherein the at least one polycationic polymer is selected from the group consisting of polyvinyl amine (PVAm), polyallyl amine (PAAm), and polydiallyl amine (PDAm), preferably the polycationic polymer is polyvinyl amine.

5. The method of any one of the preceding claims, wherein the polycationic polymer is provided in solid form, in particular wherein the polycationic polymer is prepared from an aqueous solution by freeze-drying, preferably the polycationic polymer is prepared from an aqueous solution comprising 3 to 15% by weight of polyvinyl amine and 30 to 95% by weight of water.

6. The method of any one of the preceding claims, wherein the melt-compounding is carried out in an extruder or compounder, in particular wherein the molten polymer blend is extruded through a die, preferably a die having a round cross-section.

7. The method of any one of the preceding claims, wherein the extruded polymer blend is cooled by a water bath and/or a conveyor belt filled with water; and/or the cooled polymer blend is pelletized, preferably by a pelletizing device, cutting device, or granulator.

8. An antimicrobial polymer material obtainable by a method according to any one of the preceding claims.

9. Use of an antimicrobial polymer material of claim 8 as a masterbatch for manufacturing an antimicrobial-treated article.

10. A method for manufacturing an antimicrobial-treated article, the method comprising:
adding an antimicrobial polymer material as defined in claim 8 to a thermoplastic polymer material to produce a polymer composition,
melt-compounding the polymer composition, and
forming the article.

11. The method of claim 10, wherein the polymer material of the antimicrobial polymer material and of the thermoplastic polymer material is the same, or is different; and/or wherein the polymer material is low density polyethylene, linear low density polyethylene, ethylene vinyl alcohol copolymer, and/or polypropylene.

12. The method of claim 10 or 11, wherein the melt-compounding is carried out in an extruder or compounder.

13. The method of any one of claims 10 to 12, wherein the article is formed by film extrusion, blow molding, or injection molding.

14. An article obtainable by a method according to any one of claims 10 to 13.

15. The article of claim 14, wherein the article comprises an amount of the least one polycationic polymer of 0.3 to 5% by weight, based on 100% by weight of the polymer composition; and/or the article has an antimicrobial activity of at least of 90% (1 log) as measured by ISO 22196 against *Escherichia coli* ATCC 25922 and/or *Staphylococcus aureus* ATCC 6538 and/or *Pseudomonas aeroginosa* ATCC 15442 and/or *Salmonella enterica* ATCC 10708 and/or *Candida albicans* ATCC 10231.
